# EUROPÄISCHE PATENTSCHRIFT

(11) **EP 0 622 147 B1**
(45) Veröffentlichungstag und Bekanntmachung des Hinweises auf die Patenterteilung: **20.08.1997**
(21) Anmeldenummer: 94103276.5
(22) Anmeldetag: 04.03.1994
(51) Int. Cl.: B23K 11/06

(54) **Verfahren zum Rollnahtschweissen von Behältern und Rollnaht-Widerstandsschweissmaschine zur Durchführung des Verfahrens**
Procedure for the roller seam welding of receptacles and resistance roller seam welding machine for carrying out the procedure
Procédé pour le soudage en ligne continue par molettes et machine pour le soudage à résistance en ligne continue par molettes pour l'exécution de procédé

(30) Priorität: 08.04.1993 CH 1092/93; 01.02.1994 CH 290/94
(43) Veröffentlichungstag der Anmeldung: 02.11.1994
(73) Patentinhaber: ELPATRONIC AG, CH-6303 Zug (CH)
(72) Erfinder: Grau, Walter, CH-8953 Dietikon (CH); Matievic, Tomislav, CH-8603 Schwerzenbach (CH); Schlemmer, Manfred, CH-8953 Dietikon (CH)

(56) Entgegenhaltungen:
- DE-A- 3 603 919
- DE-C- 914 763
- FR-A- 2 140 716
- JP-U- 4 000 470
- US-A- 5 010 226

## Beschreibung

Die Erfindung betrifft ein Verfahren zum Rollnahtschweissen und eine Rollnaht-Widerstandsschweissmaschine zur Durchführung desselben (seihe z.B. US-A-5 010 226).

Es ist bekannt, Rollnaht-Schweissmaschinen insbesondere zum Schweissen von Fahrzeugkraftstoffbehältern einzusetzen. Zwei Schweissrollen, eine obere und eine untere Schweissrolle, denen jeweils eine Drahtelektrode zugeführt wird, folgen dabei der Kontur der aufeinanderliegenden, vorgehefteten Schweissflansche der Behälterhälften. Für das Schweissen von Behältern deren Schweissflansche in einer Ebene liegen ist es dabei insbesondere bekannt, einen Werkstücktisch zur Aufnahme des vorgehefteten Behälters vorzusehen, welcher Tisch mit iner Kontur, z.B. der Aussenkontur, versehen ist, die der zu schweissenden Tank-Kontur entspricht. Der Werkstücktisch wird dann entlang seiner Kontur bewegt und damit wird auch der Schweissflansch des auf dem Tisch befestigten Behälters zwischen den an der Maschine lagefest angeordneten Schweissrollen bewegt. Diese Art der Bewegung des Behälters, wobei der Antrieb des Tisches bekannterweise mittels einer Verzahnung der Tischaussenkontur und einem daran angreifenden Antriebszahnrad erfolgt und ferner ein angetriebener Arm (sogenannter Pantograph) am Tisch angreift, der die Tangentialität der Kontur zur Schweissrichtung sicherstellt, hat sich für die Schweissung von Behältern mit eben verlaufendem Schweissflansch bewährt.

Die Fahrzeughersteller wünschen indes zunehmend komplexe Tankformen, bei deren Realisierung ein nicht ebener Verlauf der Behältertrennfläche bzw. des Schweissflansches notwendig wird. Zur Schweissung solcher Tankformen ist die technische Entwicklung bisher ausschliesslich dahingehend verlaufen, den zu schweissenden Tank entsprechend zu bewegen und den Schweissflansch weiterhin an den lagefest angeordneten Schweissrollen vorbeizuführen. Zur Bewegung des Tanks ist dabei insbesondere ein Werkstücktisch vorgeschlagen worden, bei welchem der Tank um eine Kippachse gekippt werden kann (Jap. Gebrauchsmuster 4-470). Ferner ist auch vorgeschlagen worden, den Tank mittels eines Industrieroboters zu bewegen (DE-A-36 03 919). Es hat sich gezeigt, dass bei dieser Art der Schweissung der genaue Verlauf des mit sehr kleinen Toleranzen vorbestimmten Schweisspfades oft nicht eingehalten werden kann. Die dreidimensionale Bewegung des Tanks ist schwierig zu beherrschen, insbesondere bei grossen und schweren Tanks. Darunter kann die Schweissgeschwindigkeit leiden, welche für eine rationelle Tankherstellung möglichst hoch sein sollte.

Der Erfindung liegt deshalb die Aufgabe zugrunde, ein Verfahren zum Rollnahtschweissen komplex geformter Behälter zu schaffen, bei denen der Schweissflansch nicht in einer Ebene liegt. Dabei soll auf möglichst einfache Weise ein genau verlaufender Schweisspfad und hohe Schweissgeschwindigkeit erzielt werden.

Der Erfindung liegt weiter die Aufgabe zugrunde eine Rollnaht-Widerstandsschweissmaschine zu schaffen, mit der das Verfahren durchgeführt werden kann. Die Maschine soll dabei eine möglichst einfache und dennoch äusserst präzise Verfolgung des Schweisspfades und hohe Schweissgeschwindigkeit ermöglichen und auch für grosse und schwere Tanks das Schweissen dreidimensional verlaufender Schweissflansche mit hoher Schweissgeschwindigkeit erlauben.

Die Aufgabe wird bei einem Verfahren der eingangs genannten Art durch die kennzeichnenden Merkmale des Anspruchs 1 gelöst. Bei einer Rollnaht-Widerstandsschweissmaschine wird die Aufgabe mit den kennzeichnenden Merkmalen des Anspruchs 4 gelöst.

Es hat sich gezeigt, dass durch das Entkoppeln der Tankbewegungen auf die erfindungsgemässe Weise, bei dem die Bewegung in der Ebene der Tankhalterung zugewiesen wird und die dritte Dimension den entsprechend bewegten Schweissrollen zugewiesen wird, eine ausgezeichnete Qualität des Schweissnahtverlaufs und der Schweissnaht auch bei kompliziert dreidimensionalem Verlauf des Schweissflansches erzielbar ist. Ferner ist die Handhabung des Tanks, da nur in der Ebene erfolgend, einfach; dies auch für grosse und schwere Tanks. Die Bewegung der Schweissrollen hingegen ist präzis beherrschbar, da alle Parameter bekannt und unabhängig von der Grösse bzw. dem Gewicht des Tanks sind.

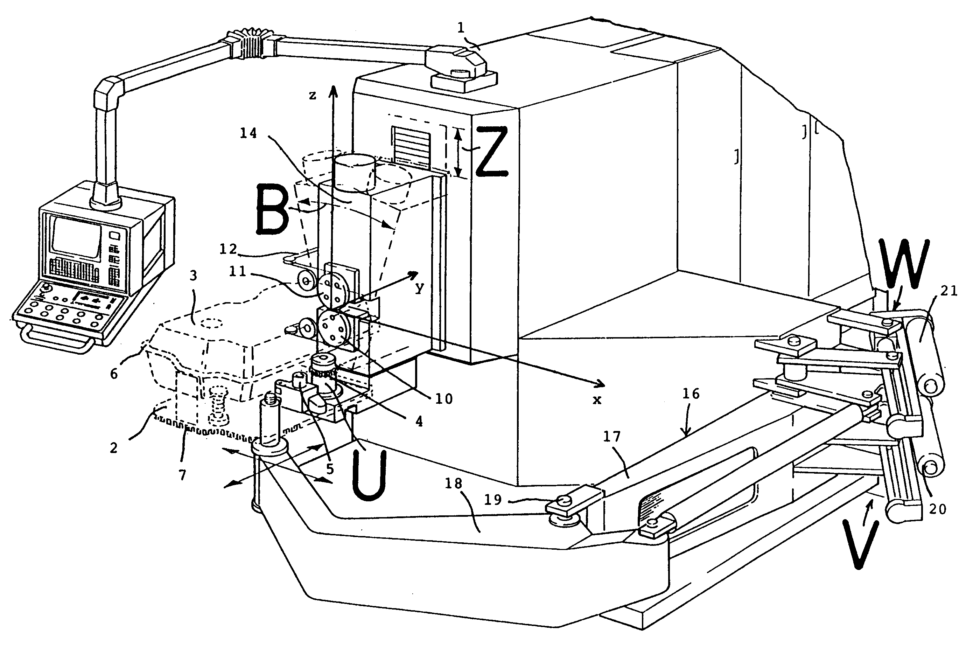

Im folgenden werden Ausführungsbeispiele der Erfindung anhand der einzigen Figur erläutert, welche eine erfindungsgemässe Maschine in einer schematischen Perspektivansicht zeigt.

Die in der Figur gezeigte Rollnaht-Widerstandsschweissmaschine 1 weist einen Werkstücktisch 2 auf. Der Werkstücktisch 2 ist an seiner äusseren Kontur mit einer Verzahnung 7 versehen. Die äussere Kontur des Werkstücktisches entspricht dabei der Projektion des Sollschweisspfades auf dem Schweissflansch 6 des auf dem Werkstücktisch befestigten zu schweissenden Fahrzeugtanks 3. Der Tisch 2 wird durch ein Antriebsritzel 4 bewegt, welches in die Verzahnung 7 eingreift. Eine Gegenhalterung 4 stellt den sicheren Eingriff des Ritzels bei der Bewegung des Werkstücktisches 2 sicher. Die Achse des Ritzels 5 bildet eine erste Achse U der Tankbewegung. Der Werkstücktisch ist ferner an einem Arm 16, welcher als Pantograph bezeichnet wird, befestigt. Der Pantograph ist mit einem ersten Antrieb 20, z.B. einem Schraubenspindelantrieb, versehen. Mit diesem Antrieb 20 wird der Pantograph bzw. der Werkstücktisch 2 so bewegt, dass die Tangentialität der Kontur zur Schweissrichtung sicher gegeben ist. Der angetriebene Pantograph bildet eine zweite Achse V. Die bisher geschilderte Bewegungsmöglichkeit des Werkstücktisches mit den Achsen U und V ergibt die Möglichkeit zur Bewegung des Tanks in einer Ebene. Der Flansch 6 des Tanks 3 befindet sich bei der Schweissung zwischen den Schweissrollen 10 und 11, denen jeweils eine Drahtelektrode 12 zugeführt wird. Die Schweissrollen drehen sich jeweils um ihre Mittelachse und der Tank 3 wird auf die geschilderte Weise derart bewegt, dass die Schweissrollen 10 und 11 den vorbestimmten Schweisspfad auf dem Schweissflansch 6 abfahren. Bei der gezeigten Maschine 1 sind nun die Schweissrollen an einem Kopf 14 angeordnet, welcher vertikal nach oben oder nach unten verfahren werden kann. Dies ergibt nun die Möglichkeit, dass das Schweissrollenpaar auch einem nicht ebenen, ansteigenden oder abfallenden, Verlauf des Schweissflansches folgen kann. Der Kopf 14 ist dazu in vertikaler Richtung, in der Z-Achse, mittels eines Antriebes verfahrbar. Gesteuert wird der Antrieb in der Z-Achse durch eine numerische Maschinensteuerung, was nachfolgend noch erläutert wird. In dem in der Figur gezeigten Beispiel ist die Maschine mit einer weiteren Achse B versehen, um welche der Kopf 14 geschwenkt werden kann. Die Schwenkbewegung ermöglicht es, dass der Schweisspunkt bei den Schweissrollen beim Verfahren des Kopfes 14 in Z-Richtung am selben Ort gehalten werden kann, wie er bei der Schweissung des ebenen Teils des Schweissflansches 6 liegt. Mit der so gezeigten Bewegung des Tanks 3 in der Ebene in Kombination mit der vertikalen Verfahrbarkeit und vorzugsweise auch der Schwenkbarkeit des Kopfes B können dreidimensionale Schweissflanschverläufe ohne Probleme geschweisst werden. Der Tank 3 wird dabei durch die Tisch- und Pantograph-Führung äusserst präzise bewegt, was einen genauen Verlauf des Schweisspfades ermöglicht. Die Verfahrbarkeit des Kopfes 14 mit den Schweissrollen ermöglicht es, dass der präzisen Konturvorgabe auch bei ansteigendem oder abfallendem Verlauf des Schweissflansches gefolgt werden kann. Es ergeben sich daraus die bereits geschilderten Vorteile. Der Pantograph 16 ist in zwei Abschnitte 17 und 18 unterteilt. Der Abschnitt 18 ist dabei mittels einer Drehachse 19 drehbar am Abschnitt 17 befestigt und mit einem eigenen Antrieb 21 versehen. Dieser angetriebene Pantographenteil bildet eine weitere Achse, die W-Achse der Maschine. Dieser weitere Antrieb stellt dabei auch die Einhaltung der Tangentialität bei denjenigen Situationen sicher, bei welchen durch den herkömmlichen Pantographen eine Unterbestimmung eintritt. Dies ist der Fall, wenn sich der Pantograph in einer gestreckten Lage befindet. Auch der Antrieb 21 kann z.B. als Schraubspindelantrieb ausgestaltet sein. Bisher war es nicht bekannt, die W-Achse des Pantographen ebenfalls anzutreiben, wenn der Tisch 2 bereits mittels der Achse U definiert bewegt wurde. Es hat sich aber gezeigt, dass für die Erzielung bester Bahntreue der Schweissung ein solcher kombinierter Antrieb sehr vorteilhaft ist. Die Bahntreue ist bei der Tankschweissung (neben der Geschwindigkeitstreue) sehr wichtig, da zunehmend sehr komplexe Tankformen geschweisst werden sollen, und da der Schweissflansch relativ schmal ist. Da beim Schweissen Querkräfte auftreten ist die Einhaltung der Bahntreue nicht einfach, wird aber durch die gezeigten U-, V-, W-Antriebe erzielt. Es ergibt sich eine geschlossene kinematische Kette. Vorzugsweise ist der Antrieb für die W-Achse - wie in der Figur gezeigt - ebenfalls hinten am Pantographen und maschinenfest angeordnet und wirkt über einen Parallelogrammantrieb auf den vorderen Pantographenteil 18 ein. Dadurch ergbit sich ein präziser Antrieb mit geringen bewegten Massen.

Die Steuerung der Maschine erfolgt durch eine numerische Steuereinheit. Die Steuerung für die Bewegung des Tisches 2 ist dabei an sich bereits von den nur in der Ebene arbeitenden Maschinen her bekannt. Zusätzlich wird nun der Steuereinheit die Steuerung des Kopfes 14 übertragen. Der Kopf 14 muss dabei so verfahren werden, und allenfalls geschwenkt werden, dass die Schweissrollen dem vorgegebenen Anstieg oder Abfall des Schweissflansches 6 entsprechend bewegt werden. Die Schwenkung des Kopfes 14 erfolgt dabei in Funktion der vorgegebenen Steilheit des Anstiegs oder des Abfalls des Flansches 6, um die Schweisszone zwischen den Rollen unabhängig von der Vertikalverfahrung des Kopfes 14 am selben Ort zu belassen. Diese zusätzlichen Steuerungsfunktionen können von einer herkömmlichen numerischen Steuerung, wie sie bei solchen Schweissmaschinen bereits eingesetzt sind, ohne weiteres übernommen werden.

## Patentansprüche

1. Verfahren zum Rollnaht-Schweissen eines Behälters, insbesondere eines Fahrzeug-Kraftstoffbehälters, bei welchem der Schweissflansch nicht in einer Ebene verläuft, dadurch gekennzeichnet, dass bei der Schweissung mit dem Behälter nur Bewegungen in einer Ebene ausgeführt werden, wozu ein konturgeführter Tisch zur Aufnahme des Behälters und ein mindestens zweiachsig angetriebener Arm für den Tisch vorgesehen ist, und dass zur Schweissung der nicht eben verlaufenden Schweissflanschabschnitte die Schweissrollenachsen gemeinsam gegenüber der Bewegungsebene verschoben werden, damit die Schweissrollen dem Schweissflanschverlauf folgen.

2. Verfahren nach Anspruch 1, dadurch gekennzeichnet, dass die Schweissrollen an einem höhenverfahrbaren und schwenkbaren Kopf angeordnet sind.

3. Verfahren nach Anspruch 1, dadurch gekennzeichnet, dass der Antrieb des einen Tragarmteiles über einen Parallelogrammantrieb erfolgt.

4. Rollnaht-Widerstandsschweissmaschine zur Durchführung des Verfahrens nach Anspruch 1, gekennzeichnet durch einen entlang einer Kontur desselben formschlüssig zur Bewegung in einer Horizontalebene angetriebenen Werkstücktisch (2), einen ausserhalb der Werkstücktischantriebsachse (U) gelagerten, angetriebenen, die Lage des Werkstücktisches in bezug auf die Schweissrollen (10,11) bestimmenden zweiteiligen Arm (16), und durch Schweissrollen, welche im Schweissbetrieb gemeinsam in Vertikalrichtung (Z) verfahrbar sind.

5. Rollnaht-Widerstandsschweissmaschine nach Anspruch 4, dadurch gekennzeichnet, dass die Rollen im Schweissbetrieb gemeinsam um eine Horizontalachse schwenkbar sind.

6. Rollnaht-Widerstandsschweissmaschine nach Anspruch 5, dadurch gekennzeichnet, dass die Rollen an einem vertikal verfahrbaren und um eine Horizontalachse schwenkbaren Rollenträger (14) angeordnet sind.

7. Rollnaht-Widerstandsschweissmaschine nach einem der Ansprüche 4 bis 6, dadurch gekennzeichnet, dass der Arm (16) eine Knickachse (19) und einen Antrieb für den sich von der Knickachse zum Werkstücktisch erstreckenden Armteil (18) aufweist, dessen Antriebsmotor (21) über ein Parallelogramm auf den Armteil einwirkt.

8. Rollnaht-Widertandsschweissmaschine nach Anspruch 7, dadurch gekennzeichnet, dass der Antriebsmotor (21) für den vorderen Armteil (18) maschinenfest im Bereich des tischabgewandten Endes des Tragarms (16) angeordnet ist.

## Claims

1. Process for the roller seam welding of a container, in particular a motor vehicle fuel tank, in which the welding flange does not lie in one plane, characterized in that the motions executed by the tank during welding are entirely in one plane, a contour-guided table being provided to hold the tank and an arm driven in at least two axes being provided for the table, and in that when welding the non-level sections of the welding flange the axes of the welding rollers are shifted, as a unit, with respect to the movement plane so that the welding rollers follow the profile of the welding flange.

2. Process according to Claim 1, characterized in that the welding rollers are mounted on a vertically traversable and tiltable head.

3. Process according to Claim 1, characterized in that the drive to a support arm section is via a parallelogram linkage.

4. Resistance roller seam welding machine for carrying out the process according to Claim 1, characterized by a workpiece table (2) positively driven along a contour thereof for motion in a horizontal plane, a two-part driven arm (16) mounted away from the workpiece table drive axis (U) and determining the position of the workpiece table with respect to the welding rollers (10, 11), and by welding rollers which are traversable, as a unit, in a vertical direction (Z) during the welding operation.

5. Resistance roller seam welding machine according to Claim 4, characterized in that the rollers are tiltable, as a unit, about a horizontal axis during the welding operation.

6. Resistance roller seam welding machine according to Claim 5, characterized in that the rollers are mounted on a carriage (14) which is vertically traversable and tiltable about a horizontal axis.

7. Resistance roller seam welding machine according to any one of Claims 4 to 6, characterized in that the arm (16) has a hinge (19) and a drive mechanism for the arm section (18) extending from the hinge to the workpiece table, the motor (21) of the said drive mechanism acting on the arm section via a parallelogram linkage.

8. Resistance roller seam welding machine according to Claim 7, characterized in that the drive motor (21) for the forward arm section (18) is fixed to the machine in the region of the opposite end of the arm (16) to that which carries the table.

## Revendications

1. Procédé pour le soudage en ligne continue par molettes d'un réceptacle, en particulier d'un réservoir de carburant de véhicule automobile, dans lequel le rebord à souder ne s'étend pas dans un plan, caractérisé en ce que, lors du soudage, le réservoir n'exécute que des mouvements dans un plan, une table guidée par un contour étant prévue pour recevoir le réservoir et un bras entraîné au moins selon deux axes étant prévu pour la table, et en ce que, pour souder les sections du rebord à souder qui ne s'étendent pas dans un plan, les arbres des molettes de soudage sont déplacés conjointement par rapport au plan du mouvement de telle sorte que les molettes de soudage suivent le tracé du rebord à souder.

2. Procédé selon la revendication 1, caractérisé en ce que les molettes de soudage sont agencées sur une tête qui peut se déplacer en hauteur et pivoter.

3. Procédé selon la revendication 1, caractérisé en ce que l'entraînement d'une première partie du bras de support se fait par un entraînement en parallélogramme.

4. Machine de soudage à résistance en ligne continue par molettes pour réaliser le procédé selon la revendication 1, caractérisée par une table porte-pièce (2) entraînée le long d'un contour de ladite table avec adaptation de formes dans un déplacement dans un plan horizontal, par un bras (16) à deux parties monté à l'extérieur de l'axe d'entraînement (U) de la table porte-pièce, entraîné, et déterminant la position de la table porte-pièce par rapport aux molettes de soudage (10, 11), et par des molettes de soudage qui peuvent être déplacées conjointement dans la direction verticale (Z) au cours du soudage.

5. Machine de soudage à résistance en ligne continue par molettes selon la revendication 4, caractérisée en ce que les molettes peuvent pivoter conjointement autour d'un axe horizontal en cours de soudage.

6. Machine de soudage à résistance en ligne continue par molettes selon la revendication 5, caractérisée en ce que les molettes sont agencées sur un porte-molettes (14) qui peut être déplacé verticalement et peut pivoter autour d'un axe horizontal.

7. Machine de soudage à résistance en ligne continue par molettes selon l'une quelconque des revendications 4 à 6, caractérisée en ce que le bras (16) présente un arbre coudé (19) et un entraînement pour la partie (18) du bras s'étendant de l'arbre coudé à la table porte-pièce, partie dont le moteur d'entraînement (21) agit sur la partie du bras via un parallélogramme.

8. Machine de soudage à résistance en ligne continue par molettes selon la revendication 7, caractérisée en ce que le moteur d'entraînement (21) pour la partie avant (18) du bras est agencé de manière fixe sur la machine dans la zone de l'extrémité du bras de support (16) opposée à la table.
